Europäisches Patentamt

European Patent Office

Office européen des brevets

(11) Publication number: 0 209 396
A2

# (12) EUROPEAN PATENT APPLICATION

(21) Application number: 86305554.7

(22) Date of filing: 18.07.86

(51) Int. Cl.4: **F16L 55/16** , B32B 27/12

(30) Priority: 19.07.85 GB 8518250

(43) Date of publication of application:
21.01.87 Bulletin 87/04

(84) Designated Contracting States:
AT BE CH DE FR GB IT LI LU NL SE

(71) Applicant: DRG (UK) LIMITED
1 Redcliffe Street
Bristol Avon, BS99 7QY(GB)

(72) Inventor: Freeman, Michael Ashley
8 Shipley Road
Westbury-on-Trym Bristol(GB)
Inventor: Heron, Andrew David
5 Madison Close
Yate, BS17 5E2(GB)

(74) Representative: Stuart, Ian Alexander et al
MEWBURN ELLIS & CO. 2/3 Cursitor Street
London EC4A 1BQ(GB)

(54) Lining material, e.g. for pipes.

(57) Lining material, particularly for sewer pipes, comprises felt 10 which is impregnated with UV-curable resin and has a multilayer material 12 bonded to one face to provide an abrasion resistant surface 22. The resin contains styrene which tends to escape and to cause delamination. To restrain this, the multilayer material 12 includes a barrier layer 18 (e.g. of EVOH and/or nylon), and the inner layer 14 is such that its bonding to the felt 10 is not impaired by styrene, e.g. being an ionomer such as Surlyn. Thus the material can have a long shelf life, and be easy to cure when required.

EP 0 209 396 A2

## LINING MATERIAL, E.G. FOR PIPES

The present invention relates to lining material which may be used for lining pipes, particularly sewer pipes.

A known way of lining passageways such as sewer pipes uses pre-formed flexible tubular structures. Such a tubular structure may be a tube of a felt material impregnated with a heat-curable resin, the felt having a smooth, impermeable outer coating, for example of polyurethane. (Further details are given in British Patent Specification No. 1,569,675.) To line a sewer, an appropriate length of the tubular structure is passed along an inversion tube, and the end of the structure is turned inside-out and attached to the end of the inversion tube. That end of the tube is placed adjacent the end of the sewer. Pressurised fluid is passed into the inversion tube, externally of the tubular structure (which is not in its fully expanded tubular form, but is compacted.) The fluid pressure causes the structure to be expelled through the end of the inversion tube, turning inside-out as it passes through the mouth thereof. It is driven along the sewer by the fluid pressure. The whole structure ends up inside the sewer, with the polyurethane layer now defining its inner surface. The fluid pressure urges it radially outwardly, so as to conform to the shape of the inner wall of the sewer. The pressurising fluid, e.g. water, is then heated, and this heat causes the resin impregnating the felt to harden. The result is a very tough lining which fits snugly within the sewer. The inner surface provided by the polyurethane layer is very smooth, which assists fluid flow when the sewer is returned to use. It will be appreciated that the relining process has been achieved without the need to dig up the road along the length of the sewer. Indeed, access via existing manholes is generally sufficient.

This system has been very successful, and works very well. A drawback is the need to heat the pressurising water to cause the resin to cure and harden. This requires the use of a large boiler, which is expensive to acquire and to run. It would therefore be advantageous to use a resin which could be cured more easily. Another disadvantage of heat-curable resins is that they have a negligible shelf life. Thus it is necessary to mix the components of the resin shortly before impregnation of the felt, and to use the felt very soon thereafter.

Resins curable by ultraviolet light (UV) are known. However, they have not been considered for use in such systems. Furthermore, merely to substitute such a UV-curable resin for the felt impregnant used at present would not give a very useful product. Uncured resins contain fugitive components, particularly styrene. If an impregnated felt were kept for any length of time, the styrene would damage the coated felt, tending to cause delamination (i.e. detachment of the coating from the felt). Styrene also tends to escape, so that the resin becomes unreliable. (Heat-curable resins use styrene too; but their short shelf life means that they have in any case to be used before the migration of the styrene can cause serious problems.) Furthermore there are several constraints on the coating layer. Thus it may be required to be solvent weldable (to facilitate formation of a tubular structure from a web); to be sealable to the felt; to be flexible, stretchable and tough; and to have an abrasion resistant and smooth surface. If it is also required to be styrene resistant and to have good transmissivity for UV used for curing, it becomes very difficult to find a suitable film. The impregnated felt desirably has a long shelf life. (Of course, for some purposes not all of the above criteria may have to be met; but the problem is still complex.)

According to the present invention there is provided a lining material comprising a multilayer material bonded to a felt impregnated or impregnatable with a UV-curable resin; the multilayer material comprising an abrasion resistant outer surface layer, a barrier layer for restraining the passage of resin components (preferably styrene) from within the felt; and an inner layer bonded to the felt; the multilayer material having substantial UV transmissivity to allow UV-curing of the resin; and the inner layer being selected so that its bonding to the felt is not substantially impaired by constituents of uncured resin (preferably comprising styrene).

Preferably the outer surface layer is solvent weldable. Preferably the inner layer comprises an ionomer.

A preferred lining material according to the invention can have a long shelf life, since (a) loss of sytrene is hindered, (b) delamination does not occur significantly; and (c) UV-curable resins are not inherently unstable, unlike heat-curable resins. Thus for the first time pre-prepared linings can be manufactured well in advance of use, e.g. as items for export.

In another aspect the invention provides a multilayer material for attachment to a felt.

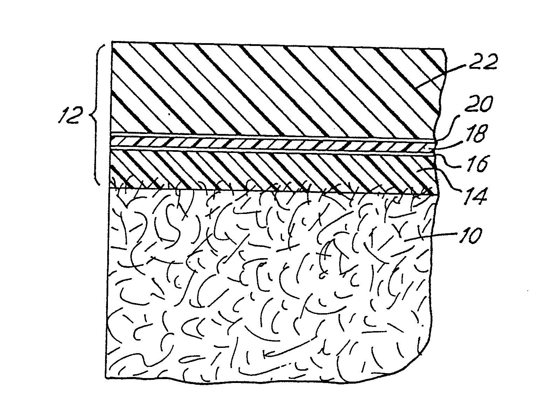

Some preferred embodiment of the invention will now be described in greater detail with reference to the sole figure of the accompanying drawing, which is a section through a lining material embodying the invention.

The material consists of a felt 10 bonded to a multilayer material or laminate 12. The felt comprises plastics fibres, e.g. of acrylic. The laminate 12 has five layers. In a first embodiment, the three adjacent the felt are formed as a coextrusion. For bonding to the felt, there is a layer 14 of an ionomer, selected to adhere strongly to the felt and not to be adversely affected to a serious degree by a styrene-containing UV-curable resin with which the felt 10 is subsequently impregnated. A suitable ionomer resin is SURLYN (Registered Trade Mark of Du Pont). This bonding ionomer layer 14 is connected by a layer 16 of adhesive to a barrier layer 18. A suitable barrier material is a copolymer of ethylene and vinyl alcohol (EVOH). This provides a good barrier to styrene. It does not bond well to most felts used in these procedures: hence the interposition of layers 14 and 16.

The outermost layer 22 of the laminate is plasticised PVC. In order to connect this to the EVOH layer 18, there is an adhesive layer 20, formed of a two-part curing adhesive. It is the layer 22 that ultimately provides the inner surface of a lined sewer.

In a practical example, the thicknesses of the layers were as follows: SURLYN layer 14: 95 $\mu$m; adhesive layer 16: 10 $\mu$m; EVOH layer 18: 15 $\mu$m; adhesive layer 20: (very thin: applied at 4 g/m²); and PVC layer 22: 200 $\mu$m. The laminate 12 was oven-cured at 50°C for 48 hours. The lamination bond strength was then in the range 7.4-10.4 Newtons/15mm. The UV transmission properties of the laminate at various wavelengths, and those of the coextrusion 14,16,18 and the PVC 22 were determined, and the results are shown in table 1 below (as 'first embodiment'). The useful range for UV-curing is 350-450 nm, the preferred range being 380-410 nm. It will be seen that the laminate has an excellent transmittance of around 75% for such radiation.

Instead of being unitary, the barrier layer 18 may comprise films of different materials, e.g. EVOH and nylon, the nylon being bonded to the SURLYN by a suitable adhesive. Other materials and combinations may be suitable, e.g. nylon alone. Furthermore, for the surface layer 22, materials other than PVC may be used, e.g. polyurethane, polypropylene or acrylic resin. Plainly the mode of connection of this layer to the EVOH layer 18 may then require adaptation. For example, a second embodiment has a laminate 12 with the following layers:

ionomer layer 14: 120 $\mu$m Surlyn

adhesive 16: 3-4 gm⁻² (2-part curing polyurethane adhesive)

barrier layer 18: 15 $\mu$m nylon 6

adhesive 20: 3-4 gm⁻² (same as 16)

surface layer 22: 120 $\mu$m Surlyn.

The UV transmission properties of this laminate are given in table 1 (as 'second embodiment').

A variant of this which is at present preferred is likewise symmetrical, having the following layers:

inner and outer layers 14,22: 100 $\mu$m Surlyn

adhesive layers 16,20: 3-5.5 (preferably 4.5) gm⁻²

barrier layer 18: 40 $\mu$m nylon 6.

This has a transmissivity at 410 nm (which in the wavelength of the preferred curing radiation) of 72.6%.

Table 1: UV Transmittance (%)

| WAVE-LENGTH (nm) | % TRANSMITTANCE | | | |
|---|---|---|---|---|
| | (1) COEXTRUSION (14,16,18) | (1) PVC (22) | (1) LAMINATE (12) | (2) LAMINATE (12) |
| 450 | 84.9 | 79.9 | 77.1 | 73.4 |
| 440 | 84.6 | 79.6 | 76.7 | 73.2 |
| 430 | 84.5 | 79.4 | 76.4 | 73.1 |
| 420 | 84.3 | 79.0 | 76.0 | 72.9 |
| 410 | 84.1 | 78.7 | 75.6 | 72.6 |
| 400 | 83.8 | 78.2 | 75.1 | 72.4 |
| 390 | 83.4 | 77.6 | 74.1 | 72.1 |
| 380 | 83.0 | 76.8 | 73.6 | 71.7 |
| 370 | 82.7 | 75.7 | 72.7 | 71.2 |
| 360 | 82.2 | 74.5 | 71.7 | 70.5 |
| 350 | 81.4 | 73.4 | 70.7 | 69.8 |

(1) first embodiment    (2) second embodiment

The felt 10 may be an acrylic or polyester material. Other possibilities include polystyrene, polypropylene and polyurethane. The felt may comprise fibres and/or filaments.

The lining material is generally produced as a web, which is subsequently formed into tubular shape. For lining large passageways, it will generally be necessary to connect a plurality of webs side-by-side to provide the necessary diameter. For connecting two webs, or the two longitudinal edges of a single web (to form a tube), we prefer to bring the two edge portions together edge to edge, and sew them together, to form a butt joint. To inhibit loss of resin components through the joint we then secure a strip of material overlying the joint region. If the surface layers 22 are of (for example) PVC, this can be done by solvent welding. The applied strip may be of PVC, PVC and barrier material, polyurethane, polyurethane and barrier material, or the laminate. If the surface layers 22 are not easily solvent weldable, e.g. if they are of Surlyn, heat welding can be used instead. For the final join to form a tube, a butt joint and a cover strip are employed in similar manner.

Similar welding techniques can be used for repair. Of course, it is generally more convenient if solvent welding can be used. However, the laminates with Surlyn on both sides have the advantage that the whole laminate 12 can be produced in a single extrusion step. With Surlyn used for both sides, only three extruders are required, the output of the Surlyn extruder being branched in a known way. If the outer layer 22 is of an extrudable material other than Surlyn, a unitary extrusion step would be possible, but inconvenient owing to the need for a further extruder.

**Claims**

1. Material for use in providing a lining, comprising a surface layer (12) for providing an abrasion resistant surface, bonded to a felt (10) which is impregnated or impregnatable with a resin; characterised in that the surface layer (12) is provided by a multilayer material which comprises: an abrasion resistant surface layer (22); an intermediate barrier layer (18) for restraining the passage of uncured resin components from within the felt; and an inner layer (14) bonded to the felt; the laminate (12) having substantial UV transmissivity to allow UV curing of a said resin in the felt (10); and the inner layer (14) being selected so that its bonding to the felt (10) is not substantially impaired by constituents of uncured resin.

2. Material according to claim 1 wherein the felt (10) is impregnated with UV-curable resin.

3. Material according to claim 1 or 2 wherein the felt (10) is impregnated with a resin containing styrene, and the intermediate barrier layer(18) is selected to provide a barrier to styrene, and the inner layer (14) is selected so that its bonding to the felt (10) is not substantially impaired by styrene.

4. Material according to any preceding claim wherein the inner layer (14) comprises an ionomer.

5. Material according to any preceding claim wherein the barrier layer (18) comprises a copolymer of ethylene and vinyl alcohol (EVOH), or nylon, or both.

6. A web (12) for bonding to a felt (10) to produce a lining material wherein the felt (10) is impregnated or impregnatable with a resin; characterised in that the web is a multilayer material (12) comprising: an abrasion resistant surface layer - (22); an intermediate barrier layer (18) for restraining the passage of uncured resin components from within the felt; and an inner layer (14) for bonding to the felt; the material (12) having substantial UV-transmissivity to allow UV curing of a said resin in the felt (10); and the inner layer (14) being selected so that its bonding to the felt (10) will not be substantially impaired by constituents of uncured resin.

7. A web (12) according to claim 6 wherein the intermediate barrier layer (18) is selected to provide a barrier to styrene, and the inner layer (14) is selected so that its bonding to the felt (10) is not substantially impaired by styrene.

8. A web (12) according to claim 6 or claim 7 wherein the inner layer (14) comprises an ionomer.

9. A method of lining a structure comprising providing a material (10,12) according to any of claims 1 to 5 wherein the felt (10) is impregnated with UV-curable resin; locating the material so as to line the structure therewith; and then subjecting it to UV irradiation to cure the resin.